# FASCICULE DE BREVET EUROPEEN

(11) **EP 0 716 766 B1**
(45) Date de publication et mention de la délivrance du brevet: **04.06.1997**
(21) Numéro de dépôt: 94926267.9
(22) Date de dépôt: 02.09.1994
(51) Int. Cl.: G09F 9/30, G09F 13/18, G02B 6/42, G02B 6/22

(54) **DISPOSITIF DE VISUALISATION A CONVERSION DE FAISCEAU LASER EN LUMIERE VISIBLE ET INCOHERENTE**
ANZEIGEVORRICHTUNG MIT UMWANDLUNG EINES LASERSTRAHLS INS INKOHÄRENTE UND SICHTBARE LICHT
DISPLAY DEVICE COMPRISING MEANS FOR CONVERTING A LASER BEAM INTO VISIBLE, INCOHERENT LIGHT

(30) Priorité: 03.09.1993 FR 9310514
(43) Date de publication de la demande: 19.06.1996
(73) Titulaire: COMMISSARIAT A L'ENERGIE ATOMIQUE, 75015 Paris (FR)
(72) Inventeur: LEBIHAN, André, F-33740 Arès (FR)
(74) Mandataire: Dubois-Chabert, Guy
(86) Numéro de dépôt international: FR9401034
(87) Numéro de publication internationale: WO9506931

(56) Documents cités:
- EP-A- 0 187 561
- WO-A-93/09450
- FR-A- 2 325 946
- GB-A- 1 392 437
- GB-A- 2 168 519
- US-A- 5 016 956

## Description

La présente invention concerne un dispositif de visualisation.

Elle s'applique notamment au domaine des enseignes et des marquages lumineux.

Pour ces derniers, on a jusqu'à présent utilisé des lampes ou des diodes photoémissives.

Il était interdit d'utiliser des lasers qui émettent des rayonnements électro-magnétiques cohérents, susceptibles de provoquer de graves lésions dans les yeux des observateurs.

Pour se protéger des lasers, il est connu d'utiliser des matériaux aptes à absorber les faisceaux lasers, mais si l'on protège ainsi les utilisateurs de lasers, on les prive, entre autres, d'une information (visible) de présence de faisceaux lasers.

GB-A-2 168 519 montre un dispostitif de visualisation utilisant un laser comme décrit dans le préambule de la revendication 1.

Pour mettre en évidence la présence d'un faisceau laser, on utilise actuellement des moyens complexes et coûteux qui nécessitent une énergie électrique pour fonctionner.

De tels moyens consistent par exemple en des lampes-témoins, des photodétecteurs, des caméras électroniques et des moyens de mesure d'énergie par absorption par un corps noir.

La présente invention a pour but de remédier aux inconvénients précédents en proposant un dispositif de visualisation qui utilise un faisceau laser et qui permet l'affichage d'informations lumineuses et notamment l'indication de la présence d'un faisceau laser.

Le dispositif objet de l'invention fournit une information en lumière visible, sans danger pour les observateurs, et ce dispositif est réalisable de façon simple et peu coûteuse et, dans bien des modes de réalisation particuliers, ne nécessite aucun apport d'énergie électrique pour fonctionner.

De façon précise, la présente invention a pour objet un dispositif de visualisation, caractérisé en ce qu'il comprend :
- un guide d'onde optique, destiné à transmettre un faisceau laser,
- au moins un élément de conversion du faisceau laser en lumière visible et incohérente, cet élément de conversion étant placé en regard du guide d'onde optique, et
- au moins un élément de sécurité, qui est placé en regard de cet élément de conversion, qui est transparent à la lumière visible et incohérente et qui est apte à arrêter le faisceau laser résiduel susceptible d'émerger de l'élément de conversion,
la lumière visible et incohérente étant ainsi observable à travers l'élément de sécurité.

Selon un mode de réalisation préféré du dispositif objet de l'invention, ce dispositif comprend en outre des moyens d'application de contraintes au guide d'onde optique pour provoquer, de la part de celui-ci, des pertes de faisceau laser et l'élément de conversion est exposé à ces pertes de faisceau laser.

Selon un mode de réalisation particulier du dispositif objet de l'invention, le guide d'onde est courbé de manière à former au moins un signe et l'élément de conversion est placé en regard de ce signe.

Selon un autre mode de réalisation particulier, le dispositif objet de l'invention comprend en outre un masque qui est opaque à la lumière visible et incohérente, qui est placé en regard de l'élément de conversion et qui est percé d'au moins un trou formant un signe.

L'élément de conversion peut être solide.

Cet élément de conversion peut être, au contraire, un liquide.

Dans ce cas, le guide d'onde optique peut être placé dans ce liquide.

Dans une réalisation particulière de l'invention, l'élément de conversion forme une gaine autour du guide d'onde optique.

Les contraintes appliquées au guide d'onde optique peuvent être constantes en fonction du temps ou, au contraire, variables en fonction du temps.

L'élément de conversion peut être en un matériau fluorescent non rémanent ou en un matériau phosphorescent rémanent (à effet mémoire).

La présente invention sera mieux comprise à la lecture de la description d'exemples de réalisation donnés ci-après à titre purement indicatif et nullement limitatif, en faisant référence aux dessins annexés sur lesquels :
- la figure 1 illustre schématiquement un dispositif conforme à la présente invention,
- la figure 2 est une vue schématique d'un mode de réalisation particulier du dispositif objet de l'invention, qui utilise divers éléments de conversion,
- la figure 3 est une vue schématique d'un autre mode de réalisation particulier qui utilise des éléments de conversion en forme de plaques,
- la figure 4 est une vue schématique et partielle d'un autre mode de réalisation particulier qui utilise des éléments de conversion formant des signes,
- la figure 5 est une vue schématique et partielle d'un autre mode de réalisation particulier qui utilise un élément de conversion en forme de gaine, et
- la figure 6 est une vue schématique d'un autre mode de réalisation particulier qui utilise un élément de conversion liquide.

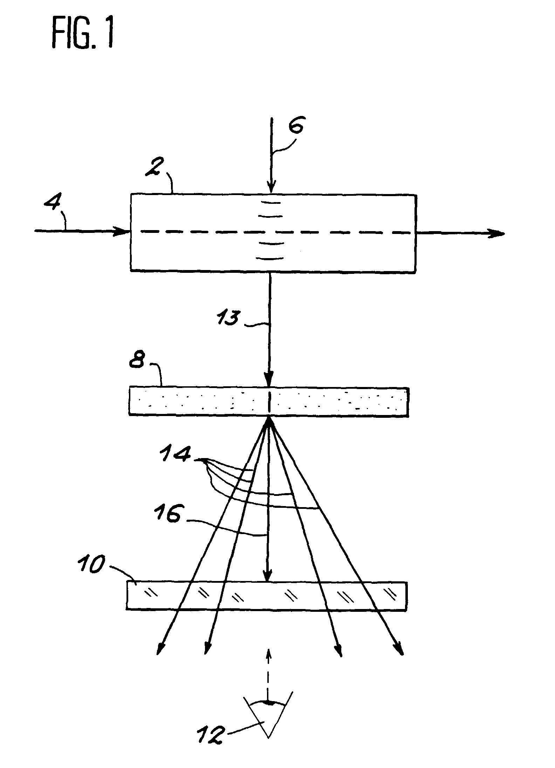

Le dispositif conforme à l'invention, qui est schématiquement représenté sur la figure 1, comprend :
- un guide d'onde optique 2, tel qu'une fibre optique, destiné à transmettre un faisceau laser 4,
- des moyens 6 d'application de contraintes au guide d'onde optique 2, qui sont schématiquement représentés par une flèche sur la figure 1 et qui provoquent, de la part du guide 2, des pertes de faisceau laser,
- un élément 8 de conversion du faisceau laser, qui est ainsi perdu par le guide 2, en une lumière visible et incohérente, et
- un élément de sécurité 10 qui est transparent à la lumière visible et incohérente émise par l'élément de conversion 8 et qui est apte à arrêter le faisceau laser résiduel susceptible d'émerger de cet élément de conversion.

Cette lumière visible et incohérente est ainsi observable par une personne 12, à travers l'élément de sécurité 10.

Le faisceau laser 4, qui est issu d'un laser non représenté, est un rayonnement cohérent qui est dangereux pour les yeux et, lorsqu'il est injecté dans le guide 2, il s'y propage de l'entrée à la sortie de ce guide, avec un facteur théorique de perte qui est nul si le guide d'onde optique 2 est adapté.

Les contraintes 6 peuvent être de type mécanique ou autre et peuvent être constantes en fonction du temps ou, au contraire, être variables en fonction du temps.

Ces contraintes, qui déforment le guide 2, désadaptent ce guide.

Une partie du faisceau laser est alors perdue par le guide 2, le long de celui-ci, comme on l'a symbolisé par la flèche 13 sur la figure 1.

L'élément de conversion 8 est exposé à cette partie 13 du faisceau laser qui est perdue latéralement par le guide 2 et convertit cette partie du faisceau laser en une lumière visible et non cohérente qui est sans danger pour les yeux d'un observateur et dont la longueur d'onde est généralement supérieure à celle du faisceau laser.

L'élément de conversion 8 contient un composé luminescent, qui est minéral ou organique et qui peut être de type fluorescent (c'est-à-dire de luminescence non rémanente) ou phosphorescent (c'est-à-dire de luminescence rémanente).

L'élément de sécurité 10 constitue une fenêtre optique qui est transparente à la lumière visible et incohérente 14 issu de l'élément de conversion 8 mais qui arrête, généralement par absorption, le rayonnement laser résiduel 16 susceptible de sortir de l'élément de conversion 8.

L'observateur 12 peut alors observer en toute sécurité les multiples effets lumineux des zones luminescentes de l'élément de conversion 8, qui sont exposées au rayonnement laser perdu par le guide d'onde optique 2.

Ces effets sont modulables (notamment en faisant varier les contraintes exercées sur le guide d'onde optique) et diverses couleurs, formes et intensités lumineuses peuvent être obtenues en choisissant de façon appropriée l'élément de conversion 8.

Celui-ci peut comporter un dopant luminescent dont on choisit la nature et le pourcentage d'insertion dans un élément ou à la surface de celui-ci.

Dans l'invention, cette élément peut être solide, liquide ou gazeux et peut être fixe ou, au contraire, mobile.

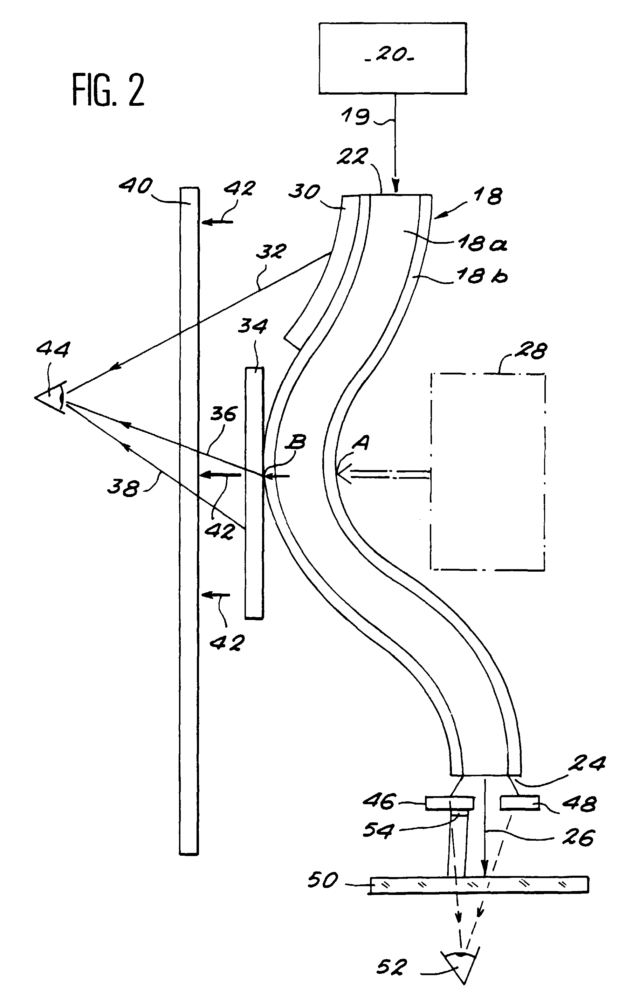

Le dispositif conforme à l'invention, qui est schématiquement représenté sur la figure 2, comprend une fibre optique souple et transparente 18 dans laquelle est injectée un faisceau laser visible 19, par exemple de couleur verte, qui est émis par un laser 20.

Le coeur et la gaine optique de la fibre 18 portent respectivement les références 18a et 18b.

Le faisceau laser 19, qui est injecté dans le coeur de la fibre 18 par la face d'entrée 22 de celle-ci, ressort par la face de sortie 24 de la fibre.

Le faisceau laser de sortie 26 peut être réinjecté dans la fibre optique 18 grâce à des moyens de réinjection non représentés mais, dans l'exemple de la figure 2, il est utilisé comme on le verra par la suite.

Lorsqu'aucune contrainte n'est exercée sur la fibre 18, la luminosité latérale de celle-ci, qui est due à de très faibles pertes de faisceau laser, est elle-même très faible.

Le dispositif de la figure 2 comprend en outre des moyens 28 prévus pour exercer une contrainte par exemple de type mécanique en un point A de la fibre 18, ce qui déforme cette fibre 18, d'où l'apparition d'une luminosité verte intense en un point B de cette fibre, luminosité qui est due à une perte importante en faisceau laser de la part de la fibre au point B.

Un premier élément de conversion 30 est placé au contact de la gaine optique de la fibre 18, non loin de la zone de déformation maximale de celle-ci (au voisinage du point A) et reçoit ainsi une certaine quantité du faisceau laser perdu.

Cet élément transparent 30, qui a par exemple une luminescence orange émet alors une lumière orange incohérente 32.

Un deuxième élément de conversion 34, qui a par exemple une luminescence rouge, est placé au contact de la gaine optique de la fibre 18, au point B (diamétralement opposé au point A) et émet de ce fait une lumière incohérente rouge intense 36.

Les autres points de l'élément de conversion 34 émettent des faisceaux lumineux rouges, tels que 38, qui sont moins intenses.

Le dispositif de la figure 2 comprend aussi un élément de sécurité 40 qui est placé en regard des éléments de conversion 30 et 34, absorbe des rayonnements lasers résiduels 42 provenant de la fibre 18 et des éléments 30 et 34 et, au contraire, est transparent aux lumières incohérentes 32, 36 et 38.

Un observateur 44 est ainsi capable de voir sans danger, à travers l'élément de sécurité 40, ces lumières 32, 36 et 38.

Dans l'exemple représenté sur la figure 2, on a placé en regard de la face de sortie 24 de la fibre 18 une lame transparente 46 ayant une luminescence jaune fluorescente (non rémanente) ainsi qu'une lame 48 ayant une luminescence phosphorescente (rémanente).

Un autre élément de sécurité 50 est placé en regard de ces lames 46 et 48 et absorbe le rayonnement laser qui lui parvient et, au contraire, est transparent aux lumières émises par les éléments 46 et 48 de sorte qu'un observateur 52 peut voir sans danger ces lumières à travers l'élément 50.

Dans l'exemple représenté, un masque 54 filtrant ou absorbant est placé contre l'élément 46, du côté de l'élément 50 et "code par ombre" la lumière issue de l'élément 46.

En choisissant un masque approprié, on est ainsi capable de reproduire des formes géométriques lumineuses préalablement choisies.

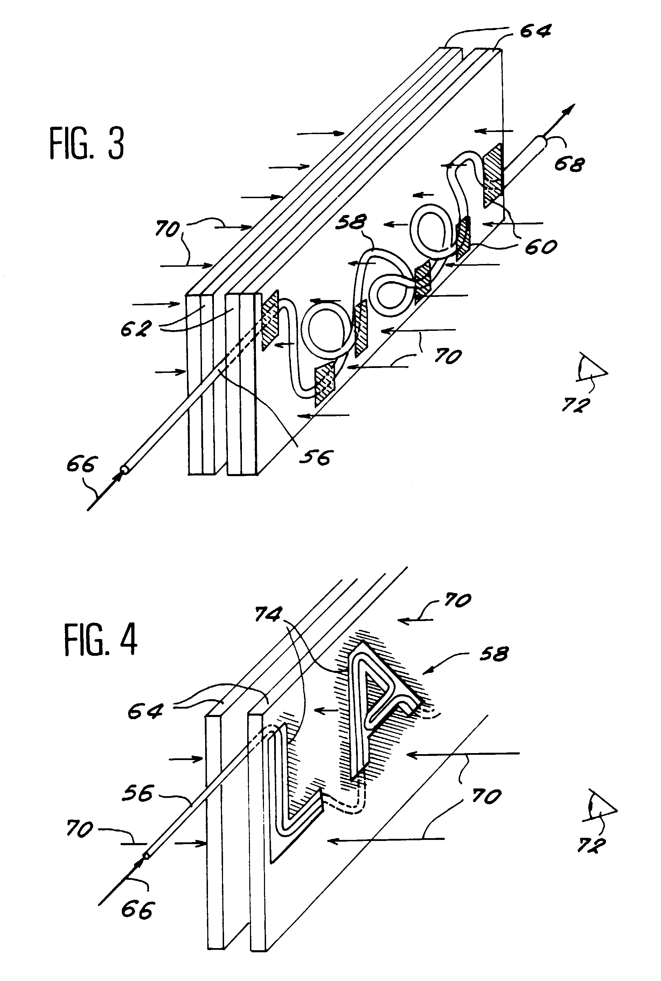

Le dispositif conforme à l'invention, qui est schématiquement représenté sur la figure 3, comprend une fibre optique 56 souple et transparente (elle n'a pas de gaine protectrice).

Cette fibre 56 est courbée de façon appropriée à différents endroits pour représenter des signes, par exemple le mot "laser".

Les zones non utiles à ces signes (dans l'exemple représenté, les zones délimitant les lettres du mot "laser") sont obturées par des caches 60.

Deux plaques 62 faites d'un matériau organique, transparent, ayant par exemple une luminescence orange par interaction avec un faisceau laser de couleur verte, sont placées de part et d'autre de la fibre optique 56 et appuient contre celle-ci.

Deux autres plaques 64 constituant des éléments de sécurité sont respectivement placées contre les plaques 62 de façon à encadrer l'ensemble constitué par ces plaques 62 et la fibre 56.

Ces plaques 64 sont faites d'un matériau organique qui est transparent à la lumière orange susceptible d'être émise par les plaques 62 et, au contraire, capable d'absorber un rayonnement laser susceptible d'être perdu par la fibre optique 56 lorsqu'un faisceau laser 66 est injecté dans celle-ci.

Pour faire fonctionner le dispositif de la figure 3, on injecte à une extrémité de la fibre un tel faisceau laser 66, qui dans l'exemple décrit est de couleur verte, et ce faisceau ressort par l'autre extrémité 68 de cette fibre.

Des contraintes mécaniques 70, qui sont constantes en fonction du temps, sont appliquées à l'ensemble constitué par les plaques 62, 64 et la fibre 56, comme on le voit sur la figure 3.

Pour réaliser ces contraintes, on utilise par exemple un ensemble de vis et d'écrous (non représentés), ces vis traversant de part en part les deux groupes de plaques 62 et 64 en étant régulièrement espacées les unes des autres le long des bords des plaques.

Les écrous sont vissés sur les vis correspondantes de manière à serrer comme on le souhaite la fibre optique entre les deux groupes de plaques 62 et 64.

Les contraintes ainsi exercées ainsi que les courbures de la fibre optique 56 provoquent des pertes de faisceau laser au niveau des lettres du mot "laser" et un observateur 72 placé en regard de l'une des plaques 64 peut lire le mot "laser" dont la luminescence orange est croissante avec la montée en puissance du laser (non représenté) qui émet le faisceau 66.

En effet, les pertes de ce faisceau 66 au niveau des lettres du mot "laser" excitent la luminescence des plaques 62 au niveau de ces lettres.

Les contraintes appliquées 70 permettent d'équilibrer le rendement lumineux du dispositif.

Une variante de réalisation de la figure 3 est schématiquement et partiellement représentée sur la figure 4.

Dans l'exemple de la figure 4, la fibre optique 56 (sans gaine protectrice) dessine le mot "LASER" (on aperçoit les deux premières lettres de ce mot sur la figure 4).

Les plaques 62 de la figure 3 sont ici remplacées par des éléments 74 qui sont faits du même matériau que les plaques 62 mais qui épousent respectivement la forme des lettres du mot "LASER" comme on le voit sur la figure 4.

Ces éléments 74 sont respectivement placés en regard des parties de la fibre 56 qui forment ce mot.

Les plaques protectrices 64 encadrent l'ensemble formé par la fibre 56 et les éléments 74.

Les contraintes 70 sont encore appliquées à l'ensemble constitué par les plaques 64, les éléments 74 et la fibre 56 comme on le voit sur la figure 4.

En reprenant l'exemple donné plus haut, les vis traverseraient seulement dans le cas présent, l'ensemble des plaques 64.

L'observateur 72, protégé par les plaques 64, peut encore lire le mot "LASER", de couleur orange.

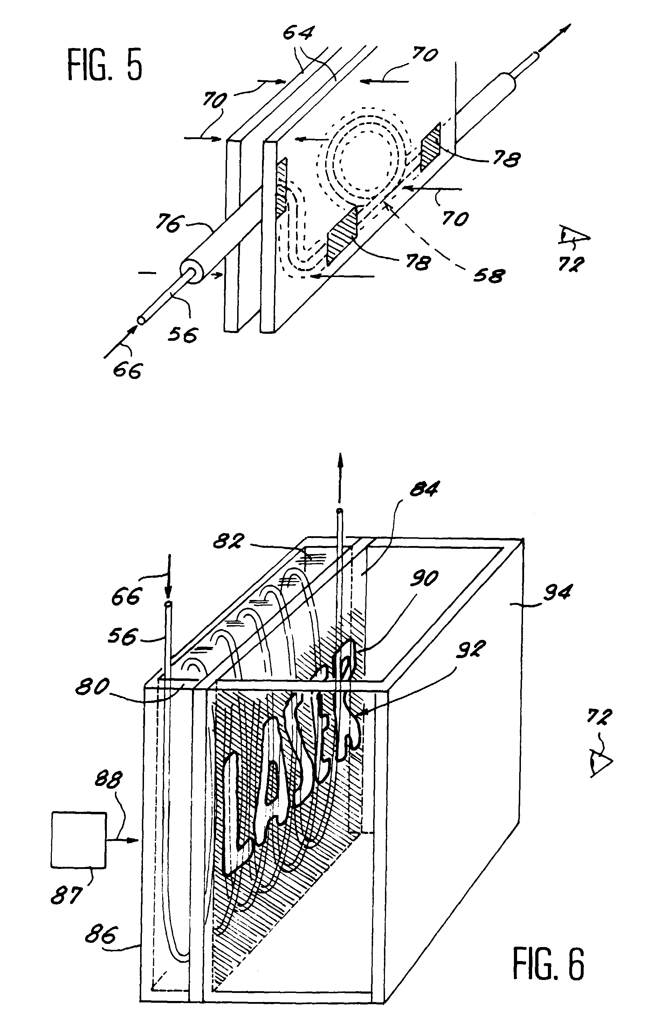

La figure 5 représente schématiquement et partiellement une autre variante du dispositif de la figure 3.

Dans le cas de la figure 5, la fibre optique 56 épouse la forme du mot "laser", les plaques 62 sont encore supprimées mais la fibre 56 (privée de gaine protectrice) est pourvue d'une gaine 76 faite d'un matériau qui est luminescent (luminescence orangée par exemple) lorsqu'il reçoit le rayonnement laser perdu par la fibre soumise à des contraintes (le faisceau laser 66 étant encore injecté dans la fibre 56 par une extrémité de celle-ci).

Les plaques 64 encadrent la fibre 56 ainsi gainée.

Le dispositif de la figure 5 comprend aussi, sur ces plaques 64, des caches 78 destinés à obturer les zones lumineuses non utiles au dessin que l'on veut visualiser.

Dans l'exemple représenté, ces caches 78 séparent les différentes lettres du mot "laser".

Sous l'effet des contraintes 70, le dispositif transmet encore l'information lumineuse à l'observateur 72 protégé du rayonnement laser par les plaque 64.

Un autre dispositif conforme à l'invention est schématiquement représenté sur la figure 6 et comprend encore la fibre optique 56 (privée de gaine protectrice) dans laquelle on injecte le faisceau laser 66.

Le dispositif de la figure 6 comprend aussi une cuve étanche 80 remplie d'un liquide 82 luminescent, apte à émettre une lumière incohérente visible lorsque ce liquide reçoit le rayonnement laser susceptible d'être perdu par la fibre optique 56.

On donne à cette fibre la forme d'un solénoïde par exemple que l'on place dans la cuve 80 et qui s'appuie contre la face-avant 84 et contre la face-arrière 86 de cette cuve.

La face-avant de celle-ci est transparente à la lumière susceptible d'être émise par le liquide 82.

Cette face-arrière 86 est souple et soumise, par des moyens appropriés 87, à des contraintes mécaniques 88 variables au cours du temps, par exemple périodiques en fonction du temps.

Ainsi, la fibre est soumise à ces contraintes périodiques et les pertes en faisceau laser ainsi que l'émission de lumière par le liquide 82 varient également de façon périodique en fonction du temps.

Un masque 90 opaque à la lumière émise par le liquide 82 est placé contre la face-avant de la cuve et percé de trous pour former les lettres du mot "LASER" 92.

Un élément de sécurité 94 est fixé à la cuve 80 et placé en regard du masque percé 90.

Cet élément de sécurité absorbe le rayonnement laser susceptible de lui parvenir et est transparent à la lumière émise par le liquide 82.

Ainsi, un observateur 72, protégé par l'élément 94, voit la luminescence du mot "LASER" varier en synchronisme avec les pressions mécaniques, variables au cours du temps, exercées sur la face-arrière souple de la cuve 80.

A titre purement indicatif et nullement limitatif, les plaques 62 de la figure 3 et les éléments 74 de la figure 4 sont en matériau Fluo ORANGE épaisseur 3 mm, de la Société DACRYL, la gaine 76 de la figure 5 est une gaine souple transparente de revêtement intérieur en peinture luminescente orange non rémanente (par exemple Fluocolor Marque ALAC), les plaques 64 des figures 3, 4 et 5 sont en matériau Altuglas 500 épaisseur 3 mm de protection absorbante D6 pour laser de la classe IV, commercialisé par la Société DACRYL, le liquide 82 de la figure 6 est de l'eau additionnée de fluoréscéine et l'élément 94 de la figure 6 est en matériau Altuglas 500 épaisseur 3 mm.

Le dispositif objet de l'invention s'applique notamment à la fabrication :
- de matériels pédagogiques pour l'enseignement de l'Optique,
- d'équipements de signalisation de fonctionnement des lasers (on notera qu'un dispositif conforme à l'invention est capable de traduire la montée en puissance d'un laser par une luminescence croissante de l'élément de conversion qu'il comporte),
- d'équipements de guidage et de balisage lumineux, insensibles aux champs électriques, magnétiques, électro-magnétiques, et utilisables, dans divers endroits (autoroutes, terrains d'aviation, zones enneigées), sans apport d'énergie électrique, et
- d'enseignes lumineuses pour la publicité.

## Revendications

1. Dispositif de visualisation, comprenant:
- un guide d'onde optique (2; 18; 56), destiné à transmettre un faisceau laser,
- au moins un élément de conversion (8; 30, 34, 46, 48; 62; 74; 76; 82) du faisceau laser en lumière visible et incohérente,
caractérisé en ce que cet élément de conversion est placé en regard du guide d'onde optique, et
- en ce que le dispositif comprend au moins un élément de sécurité (10; 40, 50; 64; 94), qui est placé en regard de cet élément de conversion, qui est transparent à la lumière visible et incohérente et qui est apte à arrêter le faisceau laser résiduel susceptible d'émerger de l'élément de conversion,
la lumière visible et incohérente étant ainsi observable à travers l'élément de sécurité.

2. Dispositif selon la revendication 1, caractérisé en ce qu'il comprend en outre des moyens (6; 28; 87) d'application de contraintes (70; 88) au guide d'onde optique pour provoquer, de la part de celui-ci, des pertes de faisceau laser et en ce que l'élément de conversion est exposé à ces pertes de faisceau laser.

3. Dispositif selon la revendication 2, caractérisé en ce que la guide d'onde est courbé de manière à former au moins un signe (58) et en ce que l'élément de conversion est placé en regard de ce signe.

4. Dispositif selon la revendication 2, caractérisé en ce qu'il comprend en outre un masque (90) qui est opaque à la lumière visible et incohérente, qui est placé en regard de l'élément de conversion (82) et qui est percé d'au moins un trou formant un signe (92).

5. Dispositif selon l'une quelconque des revendications 2 à 4, caractérisé en ce que l'élément de conversion (62; 74; 76) est solide.

6. Dispositif selon l'une quelconque des revendications 2 à 4, caractérisé en ce que l'élément de conversion est un liquide (82).

7. Dispositif selon la revendication 6, caractérisé en ce que le guide d'onde optique (56) est placé dans ce liquide.

8. Dispositif selon l'une quelconque des revendications 2 à 7, caractérisé en ce que l'élément de conversion forme une gaine (76) autour du guide d'onde optique.

9. Dispositif selon l'une quelconque des revendications 2 à 8, caractérisé en ce que les contraintes (70) sont constantes en fonction du temps.

10. Dispositif selon l'une quelconque des revendications 2 à 8, caractérisé en ce que les contraintes (88) sont variables en fonction du temps.

11. Dispositif selon la revendication 1, caractérisé en ce que l'élément de conversion est en un matériau fluorescent non rémanent (46) ou en un matériau phosphorescent rémanent (48).

## Patentansprüche

1. Anzeigevorrichtung, umfassend:
- einen optischen Wellenleiter (2; 18; 56) zum Übertragen eines Laserstrahls,
- wenigstens ein Umwandlungselement (8; 30, 34, 46, 48; 62; 74; 76; 82) des Laserstrahls in sichtbares und inkohärentes Licht, **dadurch gekennzeichnet,** daß dieses Umwandlungselement dem optischen Wellenleiter gegenüberstehend angeordnet ist, und dadurch, daß die Vorrichtung wenigstens ein Sicherheitselement (10; 40, 50; 64; 94) umfaßt, diesem Umwandlungselement gegenüberstehend angeordnet, durchlässig für das sichtbare und inkohärente Licht und fähig, den Restlaserstrahl, der aus dem Umwandlungselement austritt bzw. austreten könnte, zu stoppen, wobei das sichtbare und inkohärente Licht also durch das Sicherheitselement hindurch zu sehen ist.

2. Vorrichtung nach Anspruch 1, dadurch gekennzeichnet, daß sie außerdem Einrichtungen (6; 28; 87) zum Ausüben von Belastungen (70; 88) auf den optischen Wellenleiter umfaßt, um bei diesem Laserstrahlverluste zu verursachen, und dadurch, daß das Umwandlungselement diesen Laserstrahlverlusten ausgesetzt ist.

3. Vorrichtung nach Anspruch 2, dadurch gekennzeichnet, daß der Wellenleiter so gekrümmt ist, daß er wenigstens ein Zeichen (58) bildet, und dadurch, daß das Umwandlungselement diesem Zeichen gegenüberstehend angeordnet ist.

4. Vorrichtung nach Anspruch 2, dadurch gekennzeichnet, daß sie außerdem eine Maske (90) umfaßt, undurchlässig für das sichtbare und inkohärente Licht, die dem Umwandlungselement (82) gegenüberstehend angeordnet ist und die durchbohrt ist von einem wenigstens ein Zeichen (92) bildenden Loch.

5. Vorrichtung nach einem der Ansprüche 2 bis 4, dadurch gekennzeichnet, daß das Umwandlungselement (62; 74; 76) ein Festkörper ist.

6. Vorrichtung nach einem der Ansprüche 2 bis 4, dadurch gekennzeichnet, daß das Umwandlungselement eine Flüssigkeit (82) ist.

7. Vorrichtung nach Anspruch 6, dadurch gekennzeichnet, daß der optische Wellenleiter (56) in dieser Flüssigkeit angeordnet ist.

8. Vorrichtung nach einem der Ansprüche 2 bis 7, dadurch gekennzeichnet, daß das Umwandlungselement eine Hülle (76) um den optischen Wellenleiter herum bildet.

9. Vorrichtung nach einem der Ansprüche 2 bis 8, dadurch gekennzeichnet, daß die Belastungen (70) während der Zeit konstant sind.

10. Vorrichtung nach einem der Ansprüche 2 bis 8, dadurch gekennzeichnet, daß die Belastungen (88) während der Zeit veränderlich sind.

11. Vorrichtung nach Anspruch 1, dadurch gekennzeichnet, daß das Umwandlungselement aus einem nicht-remanenten fluoreszierenden Material oder aus einem remanenten phosphoreszierenden Material (48) ist.

## Claims

1. Display unit, comprising:
- an optical waveguide (2, 18, 56) for transmitting a laser beam,
- at least one element (8; 30, 34, 46, 48; 62; 74,; 76; 82) for converting the laser beam into visible and incoherent light, characterized in that said conversion element is placed in front of the optical waveguide and
- in that the unit comprises at least one safety element (10; 40, 50; 64, 94) placed in front of the said conversion element and which is transparent to the visible and incoherent light and able to stop the residual laser beam liable to emerge from the conversion element,
so that the visible and incoherent light can be observed through the safety element.

2. Unit according to claim 1, characterized in that it also comprises means (6; 28; 87) for applying stresses (20; 88) to the optical waveguide in order to bring about, on the part of the latter, laser beam losses and in that the conversion element is exposed to these laser beam losses.

3. Unit according to claim 2, characterized in that the waveguide is curved so as to form at least one sign (58) and in that the conversion element is placed in front of said sign.

4. Unit according to claim 2, characterized in that it also comprises a mask (9) opaque to the visible and incoherent light and which is positioned facing the conversion element (82) and has at least one hole forming a sign (92).

5. Unit according to any one of the claims 2 to 4, characterized in that the conversion element (62; 74; 76) is solid.

6. Unit according to any one of the claims 2 to 4, characterized in that the conversion element is a liquid (82).

7. Unit according to claim 6, characterized in that the optical waveguide (56) is placed in said liquid.

8. Unit according to any one of the claims 2 to 7, characterized in that the conversion element forms a cladding (76) around the optical waveguide.

9. Unit according to any one of the claims 2 to 8, characterized in that the stresses (70) are constant as a function of time.

10. Unit according to any one of the claims 2 to 8, characterized in that the stresses (88) are variable as a function of time.

11. Unit according to claim 1, characterized in that the conversion element is made from a non-persistent, fluorescent material (46) or a persistent, phosphorescent material (48).
